# DEMANDE DE BREVET EUROPEEN

(11) **EP 4 459 383 A1**
(43) Date de publication de la demande: **06.11.2024**
(21) Numéro de dépôt: 23170977.5
(22) Date de dépôt: 02.05.2023
(51) Int. Cl.: G04D 7/00, G01N 29/12

(54) **DETECTION D'UN DEFAUT D'UNE DENT D'UN COMPOSANT HORLOGER**

(71) Demandeur: Richemont International S.A., 1752 Villars-sur-Glâne (CH)
(72) Inventeur: GEORGES, Frédéric, 25500 Morteau (FR); HERAUD, Alexis, 74370 Argonay (FR); STEINER, Olivier, 2014 Bôle (CH)
(74) Mandataire: Novagraaf International SA

(57) **Abrégé**

Procédé de diagnostic acoustique pour détecter une dent ébréchée d'une roue d'un mouvement horloger, comprenant les étapes suivantes :
- procéder à une détection acoustique d'un fonctionnement d'une roue avec un système mécanique, une pluralité de sons étant émis pendant le fonctionnement, lors d'une pluralité de contacts entre la pluralité de dents et le système mécanique,
- pour chaque dent, déterminer une signature temporelle (200) et/ou fréquentielle (300) du son émis,
- déterminer une signature temporelle (200) et/ou fréquentielle (300) de la pluralité de dents basée sur la signature temporelle (200) et/ou fréquentielle (300) de chaque dent,
- détecter une dent ébréchée parmi la pluralité de dents si la signature temporelle (200) et/ou fréquentielle (300) de la dent ébréchée présente un écart par rapport à la signature temporelle (200) et/ou fréquentielle (300) de la pluralité de dents supérieur à un seuil prédéterminé.

## Description

La présente invention concerne de manière générale le domaine de l'horlogerie, plus particulièrement le domaine de la détection de défaut sur les composants.

La présente invention a pour but de proposer une nouvelle façon de détecter des défauts sur des composants horlogers, notamment en silicium ou d'autres matériaux fragiles, tels que le verre, les pierres naturelles ou rubis, céramique technique, diamant, etc, et en particulier quand les moyens de détection conventionnels ne permettent pas de détecter les défauts.

Les échappements en silicium ont été introduits dans les produits horlogers. Les avantages du silicium portent sur les inerties et les géométries, grâce notamment aux procédés de fabrication. En contrepartie, un inconvénient du silicium est sa relative fragilité. Une mauvaise manipulation aux brucelles peut en effet ébrécher une surface du composant en silicium. Des préconisations particulières sur la manipulation des composants en silicium ont été mises en place afin de limiter le risque. Des opérations de contrôle sont organisées. Les composants sont inspectés avant montage. Une fois assemblés, ils sont inspectés lors de l'opération d'huilage de l'échappement mais il réside une difficulté pour mettre en place un contrôle directement sur les parties non visibles. Si elle n'est pas détectée lors des contrôles de production, une amorce de rupture peut présenter un risque de fiabilité à long terme (par exemple lors des chocs pendant l'utilisation). Le risque de casse à long terme est dès lors présent.

La fragilité du silicium (par exemple le K1c qui décrit conventionnellement l'intensité de contrainte (K) critique (C) pour le mode d'ouverture de fissure 1 fait que la taille du défaut critique est inférieure à la capacité de détection par un détecteur optique.

Lors des opérations de décottages ou de service après-vente, un diagnostic de l'intégrité des pièces, notamment en silicium, peut permettre d'orienter la recherche de la cause initiale.

Ainsi, il existe un besoin pour des diagnostics permettant la détection des défauts de composants, notamment de composants en silicium, qui soient plus performant que les moyens actuels (par exemple optiques), en particulier sur les défauts de petite taille et évite un démontage des pièces avant de déterminer la conformité ou l'anormalité de la pièce.

Le niveau de performance accrue nécessaire serait celui atteignant une fidélité suffisante en justesse et en précision de caractérisation d'un choc d'une dent (ou branche) pour permettre la comparaison univoque et reproductible de ce choc avec un choc d'une autre dent (ou branche) ou une autre référence.

Un tel niveau de performance est notamment fourni par une détection piézo-acoustique multimodes ou encore plus avantageusement une détection stéthoscopique acoustique et ultrasonique.

Dès lors, l'invention concerne un procédé de diagnostic acoustique, de préférence par une détection piézo-acoustique ou stéthoscopique, pour détecter une dent et/ou branche non conforme (ou ébréchée ou abîmée ou comprenant un défaut), d'une roue d'un mouvement horloger, comprenant les étapes suivantes :
- fournir la roue ayant une pluralité de dents ou branches, et un système mécanique, telle qu'une ancre ou une autre roue, agencé pour coopérer avec la pluralité de dents ou branches, une pluralité de sons étant émise pendant un fonctionnement de la roue avec le système mécanique, en raison d'une pluralité de contacts entre la pluralité de dents ou branches et le système mécanique,
- pour chaque dent ou branche, déterminer une signature acoustique du son émis, et
- détecter si une dent ou branche est non conforme parmi la pluralité de dents ou branches.

Le terme signature acoustique est utilisé pour décrire une combinaison d'émissions acoustiques. De plus, les mouvements et leurs composants, en fonctionnement normal ou dégradé, peuvent être décrits comme ayant leurs propres signatures acoustiques ou attributs sonores caractéristiques, qui peuvent être utilisés pour étudier leur état, leur comportement et leur emplacement physique. La signature est l'ensemble des éléments qui permettent par exemple de caractériser par un capteur la présence, le type, ou l'identité d'un objet, à partir d'un signal de l'objet prélevé ou détecté par le capteur. On entend ainsi par signature l'ensemble de traits caractéristiques et reconnaissables extractibles du signal d'un capteur et permettant d'attribuer ou d'identifier quelque chose. La signature acoustique du son émis peut être considérée comme une signature acoustique de fidélité de caractérisation suffisante en justesse et en précision.

Cette signature dépend donc non seulement de l'objet à caractériser mais aussi des caractéristiques du capteur et de la manière de l'appliquer. Par exemple, un capteur acoustique présente sa sensibilité, son bruit propre, sa réponse temporelle et en fréquence, c'est-à-dire un ensemble de caractéristiques plus ou moins déformantes ou réductrices. Plus le capteur acoustique est sensible, linéaire, sa résolution temporelle et fréquentielle étendues à toute l'émission de l'objet, et plus il est stable dans ces qualités, plus la capture d'une signature est fidèle en justesse et en précision, c'est-à-dire nette et reproductible, et donc porteuse d'informations fiables de diagnostic.

Singulièrement la détection stéthoscopique acoustique et ultrasonique en champ proche, qui présente des qualités très hautes de largeur de bande, de planéité spectrale, de faiblesse de bruit et d'immunité aux perturbations parasites, permet de proposer un procédé de diagnostic, notamment pour détecter les défauts non détectés par des moyens de détection optiques, et en particulier pour les composants en silicium. Ceci est aussi applicable aux composants en acier ou alliage métallique, amorphe ou non, matériaux cristallins, et d'une manière générale tout matériau utilisé pour les composants horlogers.

La roue est un exemple de pièce ayant une symétrie de révolution.

Avantageusement, la roue est une roue d'échappement, une croix de malte ou une surprise pour répétition minute. Le terme dent s'applique plus particulièrement à la roue d'échappement, le terme de branche s'applique plus particulièrement à la croix de malte ou à la surprise pour répétition minute, sans être limité à ces exemples. Les dents ou branches sont des exemples de protrusions de la roue et peuvent être combinée comme dans la surprise de répétition minute où les branches sont munies de dents.

Avantageusement, la dent ou branche est détectée non conforme si la signature acoustique de la dent ou branche non conforme présente un écart prédéterminé par rapport à la signature acoustique de la pluralité de dents ou branches, et de préférence l'écart est supérieur à un seuil prédéterminé.

Avantageusement, le procédé comprend en outre l'étape suivante :
- procéder à une détection acoustique du fonctionnement de la roue avec le système mécanique.

Avantageusement, la signature acoustique est une signature temporelle et/ou fréquentielle.

Avantageusement, le procédé comprend en outre l'étape suivante :
- déterminer une signature acoustique de la pluralité de dents ou branches basée sur la signature acoustique de chaque dent ou branche.

Avantageusement, le procédé comprend en outre l'étape suivante :
- soumettre à une machine de prédiction la signature acoustique pour détecter si une dent ou branche est non conforme parmi la pluralité de dents ou branches.

Avantageusement, la machine de prédiction comprend un processeur et/ou un ordinateur.

Avantageusement, la machine de prédiction comprend en outre un logiciel de prédiction, tel qu'une intelligence artificielle.

Avantageusement, la machine de prédiction comprend un ou plusieurs réseaux de neurones, tel qu'un ou plusieurs réseaux de neurones convolutifs.

La machine de prédiction permet ainsi de prédire si une dent ou branche est non conforme par déduction basée sur une comparaison acoustique avec les autres dents ou branches de la roue.

Avantageusement, la signature temporelle et/ou fréquentielle de la pluralité de dents ou branches est choisie parmi :
- une médiane des signatures acoustiques de chaque dent ou branche,
- une moyenne des signatures acoustiques de chaque dent ou branche,
- une régression linéaire des signatures acoustiques de chaque dent ou branche,
- une caractéristique commune des signatures acoustiques de chaque dent ou branche,
- une caractéristique représentative des signatures acoustiques de chaque dent ou branche, ou
- une fonction des signatures acoustiques de chaque dent ou branche.

Ceci permet d'utiliser les caractéristiques des autres dents ou branches de la roue afin de déterminer si une dent (ou plusieurs dents) ou branche (ou plusieurs branches) parmi les dents ou branches s'écarte de la valeur attendue, c'est-à-dire présente un défaut ou une inhomogénéité avec les autres dents ou branches.

Avantageusement, la signature acoustique de chaque dent ou branche est une enveloppe temporelle et/ou fréquentielle.

On entend par enveloppe une courbe décrivant l'évolution d'une propriété du son (par exemple la valeur efficace de la pression acoustique) en fonction du temps.

Avantageusement, la signature acoustique de chaque dent ou branche correspond à une période, pour chaque dent ou branche, débutant avec un son issu d'un premier contact du système mécanique sur cette dent ou branche et se termine avec un son issu d'un dernier contact du système mécanique sur cette dent ou branche.

Ceci permet d'isoler et de consigner les caractéristiques du son afin de pouvoir le comparer à un autre son ou une pluralité de sons, et de tirer une conclusion de cette comparaison.

Avantageusement, les sons émis pendant le fonctionnement sont synchrones.

On entend par synchrone, un évènement qui se produit au même moment qu'un autre ou à intervalles réguliers par rapport à un autre.

Avantageusement, la roue est une roue d'échappement et le système mécanique est une ancre.

Avantageusement, le procédé comprend l'étape suivante :
- comparer les caractéristiques sonores d'une dent ou branche parmi la pluralité de dents ou branches avec les caractéristiques sonores des autres dents ou branches de la pluralité de dents ou branches.

Avantageusement, le procédé comprend l'étape suivante :
- juger si une dent ou branche parmi la pluralité de dents ou branches est ébréchée ou anormale.

Avantageusement, l'ancre (également appelé système de palettes) comprend une palette d'entrée et une palette de sortie, et dans lequel le procédé comprend en outre les étapes suivantes :
- pour chaque dent ou branche, déterminer la signature acoustique des sons émis par au moins un contact de la palette d'entrée sur la roue et par au moins un contact de la palette de sortie sur la roue,
- déterminer la signature acoustique de la pluralité de dents ou branches basée sur la signature acoustique de chaque dent ou branche,
- détecter la dent ou branche non conforme parmi la pluralité de dents ou branches si la signature acoustique de la dent ou branche non conforme présente l'écart à la signature acoustique de la pluralité de dents ou branches supérieur au seuil prédéterminé, pour l'une de la signature acoustique relative à la palette d'entrée et/ou l'autre de la signature acoustique relative à la palette de sortie.

Ceci permet de détecter les défauts d'une roue d'échappement lors du fonctionnement avec l'ancre. Ainsi, lorsque la ou les palettes de l'ancre entrent en contact avec les dents de la roue d'échappement, il se produit un ou plusieurs sons, qu'il convient de comparer aux autres sons afin de déterminer si une dent spécifique (ou branche spécifique) présente un défaut (i.e. est anormale) ou est ébréchée. Ceci est particulièrement utile car il est ainsi possible de détecter un défaut en fonctionnement, c'est-à-dire dans l'état réel par exemple après montage et lubrification, et lorsque les pièces sont cachées et montées, ce qui est le cas en fin de production ou en service après-vente par exemple.

Avantageusement, le système mécanique est une autre roue, comme une roue de rouage du mouvement.

Ceci permet de détecter un défaut pour une autre roue qu'une roue d'échappement.

Avantageusement, le seuil prédéterminé est choisi parmi un écart type, un multiple de l'écart type, un coefficient de corrélation, ou un coefficient de variation.

On entend, en mathématiques notamment, par écart type (ou écart-type) une mesure de la dispersion des valeurs d'un échantillon statistique ou d'une distribution de probabilité. Il est défini comme la racine carrée de la variance ou, de manière équivalente, comme la moyenne quadratique des écarts par rapport à la moyenne. Il se note en général avec la lettre grecque σ (« sigma »). Il est homogène à la variable mesurée.

En théorie des probabilités et statistiques, le coefficient de variation également nommé écart type relatif, est une mesure de dispersion relative.

La déviation relative standard (RSD pour Relative Standard Déviation en anglais) est définie comme la valeur absolue du coefficient de variation et est de préférence exprimé en pourcentage.

En probabilités et en statistique notamment, la corrélation entre plusieurs variables aléatoires ou statistiques est une notion de liaison qui contredit leur indépendance. Cette corrélation peut être une corrélation linéaire entre variables quantitatives, c'est-à-dire l'ajustement d'une variable par rapport à l'autre par une relation affine obtenue par régression linéaire. Pour cela, on calcule un coefficient de corrélation linéaire, quotient de leur covariance par le produit de leurs écarts types.

La répartition optimale de Neyman peut être utilisée et résumée comme l'exclusion des valeurs extrêmes.

Ceci permet de proposer le diagnostic acoustique avec un seuil choisi qui permet d'améliorer la détection, notamment par une approche reproductible et prédéfinie du seuil.

Avantageusement, le fonctionnement de la roue avec le système mécanique consiste à faire tourner la roue et ajuster sa vitesse à l'aide du système mécanique, préférentiellement pendant au moins un tour de roue, très préférentiellement pendant une pluralité de tours de roue.

Ceci permet de tester les composants durant leur fonctionnement normal, afin de tenir compte de leur état, de la lubrification initiale ou effectivement présente, et des autres caractéristiques environnementales, afin de proposer un diagnostic concret et *in situ.*

Avantageusement, le procédé comprend en outre l'étape suivante :
- utiliser un capteur, de préférence un capteur piézo-acoustique, afin de capter la pluralité de sons.

Ceci permet de capter les sons afin de mettre en oeuvre le procédé de diagnostic. Le capteur piézo-acoustique doit avoir notamment un bon rapport signal sur bruit sur une large bande fréquentielle. Il est en outre possible de prévoir avec ce capteur piézo-acoustique un fonctionnement en multimodes afin d'obtenir un haut rapport signal-bruit sur une large gamme de fréquence via les modes propres de vibration. Ceci présente l'avantage de pouvoir aller à haute fréquence, d'améliorer la rapidité de montée du signal sonore et d'obtenir une meilleure précision temporelle. Une mesure via contact direct (transmission solidienne, par exemple par une couronne) est possible. Il est en outre possible de couper les basses fréquences afin d'isoler les bruits ambiants.

Avantageusement, le procédé comprend en outre l'étape suivante :
- utiliser un capteur, de préférence un capteur avec une pluralité de microphones ultrasoniques, par exemple digitaux, afin de capter la pluralité de sons.

La technologie MEMS (microsystème électromécanique) permet de couvrir une large bande passante (par exemple 100Hz - 80kHz), tout en autorisant une mesure sans contact en champ proche (de type stéthoscope). La pluralité de capteur peut comprendre quatre capteurs par exemple.

Pour des mesures de type chronométrie, il est possible de couper les basses fréquences afin d'isoler les bruits ambiants

Il est possible d'installer la montre sur une structure comprenant le capteur avec un (ou plusieurs) accès acoustique(s), de préférence une feutrine, une microcavité de couplage et un (ou plusieurs) accès acoustique(s) afin de permettre au capteur d'avoir une plus grande sensibilité aux sons du mouvement.

Les différents capteurs mentionnés ci-avant permettent une écoute plus fine, plus fidèle, et donc à plus grande capacité de reconnaissance par l'obtention d'une plus grande quantité d'information, par l'extension de la bande vers les hautes fréquences qui contiennent une énergie acoustique utile, par l'obtention d'une information moins perturbée par l'environnement acoustique (et vibratoire), par le fait de la dissipation rapide des longueurs d'ondes courtes dans l'air et dans les solides, par l'obtention d'une information moins perturbée par l'environnement connectique et électrique, par la numérisation des signaux au plus près de la source de transduction, par l'obtention d'un très faible bruit propre par la multiplication de transducteurs appariés, par la possibilité de mise en oeuvre des techniques de reconstruction cohérente, de décalage temporel, de convolution, de filtrage et de focalisation, c'est-à-dire plus précisément toutes les méthodes de traitement de signal et d'algorithmes d'antennerie acoustique par réseaux de microphones et applicables en champ proche. En outre, par l'emploi de transducteurs miniatures de sensibilité connue et appairés d'usine en amplitude et en phase, et pour toute leur durée de vie, la technologie ne nécessite pas de calibration initiale, ni périodique.

Avantageusement, le procédé comprend en outre l'étape suivante :
- utiliser un dispositif d'acquisition afin d'enregistrer les données sonores captées.

Avantageusement, le procédé comprend en outre l'étape suivante :
- utiliser un ordinateur afin de comparer les données sonores captées.

Avantageusement, la machine de prédiction peut identifier et différencier un défaut parmi les sons pour catégoriser la ou les dents ou branches défectueuses, et catégoriser la roue comme conforme ou non conforme.

La machine de prédiction reçoit ainsi la ou les signatures et les compare aux signatures des autres dents ou branches afin de déduire si une dent ou branche est conforme ou non.

Il est en outre possible de fournir à la machine de prédiction, et pour roue ou chaque dent ou branche:
- la signature acoustique,
- la signature acoustique attendue.

Cette phase d'apprentissage permet de bâtir des données de référence étalonnées pour une comparaison ultérieure lors d'une phase de prédiction / production avec recherche de défauts. En particulier, l'apprentissage permet d'obtenir des données de test de pièces de référence ou testées/simulées en parallèle pour la construction du modèle.

D'une manière générale, il est possible de prévoir les caractéristiques pour les dents ou les branches, qui sont des portions faisant saillies sur la roue.

La machine de prédiction utilise un modèle prédictif qu'il est possible de construire à partir du fonctionnement répété et entrainé.

Ainsi, il est possible d'entrainer le modèle pour la détection et d'ensuite utiliser le modèle, avec ou sans amélioration du modèle.

Pour établir un modèle de prédiction qui puisse recevoir en entrée les signatures sonores et donner en sortie un jugement ou une détermination de dent conforme ou non conforme, il est possible de prévoir, lors de la phase d'apprentissage, de fournir les données relatives à la signature acoustique de dents et de roue réelles testés, y compris des dents conformes et des dents non conformes confirmées par un horloger. Le modèle peut comprendre une phase de corrélation dans laquelle la signature acoustique est reliée à la conclusion de dent conforme ou non conforme. Ainsi, la machine de prédiction doit résoudre le problème de la détection de dent non conforme (y inclut toutes les variantes de détection décrites ici).

Une fois la phase d'apprentissage terminée, on peut passer à une phase de prédiction, par exemple lors d'un procédé de contrôle de roues.

Un autre aspect de la présente invention concerne un procédé d'apprentissage d'une machine de prédiction, comprenant les étapes suivantes :
- faire fonctionner une roue d'un mouvement horloger,
- enregistrer une pluralité de sons émis pendant le fonctionnement lors de contacts d'au moins une dent ou branche d'une pluralité de dents ou branches de la roue,
- entraîner la machine de prédiction à l'aide d'un modèle et d'une série de sons émis par la roue en fonctionnement, de sorte à déterminer si une dent ou branche est non conforme parmi la pluralité de dents ou branches de la roue.

Avantageusement, le modèle est prédéterminé par construction de la roue. En d'autres termes, le modèle dépend de la construction de la roue, de sa géométrie initiale et d'une manière générale de ses caractéristiques intrinsèques (géométrie, matière, état de surface, équilibrage, etc).

Avantageusement, le modèle est adapté après avoir fait fonctionner une pluralité de roues, de sorte à modifier des paramètres ou coefficient du modèle construit.

Ceci permet de proposer un procédé d'apprentissage de détection de non-conformité pour les roues de mouvement horloger.

Avantageusement, le procédé d'apprentissage est réalisé par apprentissage automatique.

Avantageusement, le procédé d'apprentissage comprend l'utilisation de réseaux de neurones.

Les données d'entrées sont la géométrie de la pièce (par exemple le nombre de dent ou branche, la taille des dents ou branche, et/ou le diamètre de la roue), et/ou la géométrie de la pièce avec laquelle elle coopère.

Les données de sorties sont un jugement ou une détermination si la roue comprend une dent ou branche non conforme, de préférence en indiquant l'index de la dent ou branche non conforme.

D'autres caractéristiques et avantages de la présente invention apparaîtront plus clairement à la lecture de la description détaillée qui suit, de modes de réalisation de l'invention donnés à titre d'exemple nullement limitatif et illustrés par les dessins annexés, dans lesquels :
- la figure 1 représente une roue d'échappement coopérant avec une ancre,
- la figure 2 représente une détection acoustique des anomalies de denture de la roue d'échappement,
- la figure 3 représente la détection acoustique des anomalies de denture de la roue d'échappement avec une vue en cascade,
- la figure 4 représente un exemple de dispositif de mesure pour mesurer un son et mettre en oeuvre le procédé de diagnostic,
- la figure 5 représente un autre exemple de dispositif de mesure pour mesurer le son et mettre en oeuvre le procédé de diagnostic.

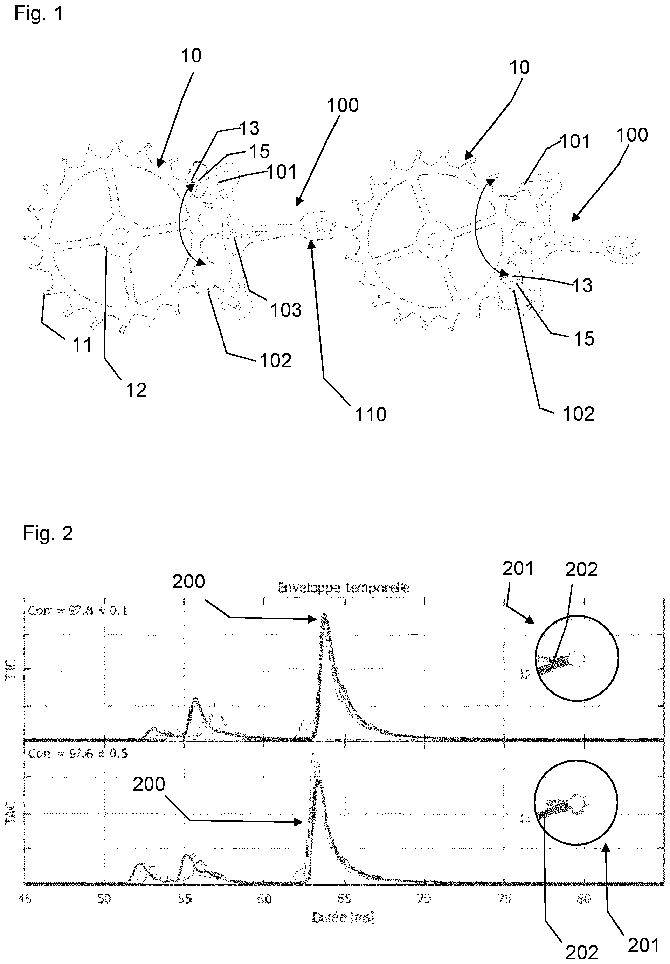

La figure 1 représente une roue d'échappement 10 coopérant avec une ancre 100 de façon conventionnelle. Dans un fonctionnement conventionnel, la roue d'échappement 10 à tendance à vouloir tourner car elle est en prise avec un barillet du mouvement de montre (non représenté) et l'ancre 100 l'empêche de tourner, ou la laisse tourner à une certaine fréquence, et transmet de l'énergie à un oscillateur du mouvement de montre (non représenté) pour l'entretenir.

L'ancre 100 comprend une fourchette 110 de façon conventionnelle, afin de permettre la coopération avec un axe du balancier.

L'ancre porte deux palettes 101, 102, c'est la palette d'entrée 101 et la palette de sortie 102. L'ancre 100 est mobile en rotation autour d'un axe de rotation d'une tige d'ancre 103 de l'ancre 100.

La roue d'échappement 10 comprend une pluralité de dents 11 et est mobile en rotation autour d'un axe de rotation d'un arbre de roue 12.

Un contact 15 est présent lors du contact de la dent en contact 13, parmi les dents 11 de la roue d'échappement 10, avec l'une des palettes 101, 102. Dans l'exemple de la figure 1, la roue d'échappement possède vingt dents 11, dont une dent en contact 13 avec la palette d'entrée 101 ou la palette de sortie 102, selon que l'on considère la figure 1 à gauche ou à droite.

A gauche de la figure 1 est représentée la roue d'échappement 10 et l'ancre 100, dans une position dans laquelle la dent en contact 13 (parmi les dents 11) est en contact avec la palette d'entrée 101. A droite de la figure 1 est représentée la roue d'échappement 10 et l'ancre 100, dans une position dans laquelle la dent en contact 13 (parmi les dents 11) est en contact avec la palette de sortie 102.

L'analyse synchrone permet de définir la signature acoustique (signature temporelle et/ou fréquentielle) de chaque dent 11, 13. Si cette signature est différente des dix-neuf autres dents 11, 13 parmi les vingt dents 11, 13 de la roue 10, cette dent 11, 13 est détectée non conforme par l'analyse synchrone.

Le procédé est ainsi détaillé en référence aux figures 1 et 2.

Pour chaque passage de dent en contact 13 avec l'une des palettes 101, 102, un son (ou plusieurs sons) est émis, qui peut correspondre au moins en partie aux sons dits « TIC » ou aux sons dit « TAC », de façon conventionnelle. Ainsi, on peut définir par « TIC » le son lié au contact entre une dent de la roue d'échappement avec le plan de repos d'une première palette, et par « TAC » le son lié au contact entre une dent de la roue d'échappement avec le plan de repos d'une deuxième palette, c'est-à-dire que le « TIC » et le « TAC » sont un premier et un deuxième son caractéristique du contact entre le plan de repos d'une première et respectivement d'une deuxième palette. On peut considérer le « TIC » comme le son d'entrée et le « TAC » comme le son de sortie de l'ancre pour ladite dent de la roue d'échappement.

Une signature acoustique, par exemple une signature temporelle 200 et/ou signature fréquentielle 300 de chaque dent en contact 13 est déterminée. Cette signature acoustique, ou signature temporelle 200 et/ou fréquentielle 300 est de préférence une enveloppe en ce sens qu'elle permet de définir le son avec un début et une fin, et de déterminer ses caractéristiques. La signature acoustique peut correspondre à une amplitude, un pic, en particulier un pic d'une durée prédéterminée, d'une amplitude au-delà d'un seuil prédéterminé, d'un nombre de pics, d'un début ou une fin signal, d'une intensité de son (décibels), sans être limité à ces exemples. En particulier, il est dès lors possible de représenter la signature acoustique et/ou les puissances en décibels en fonction du temps ou de la fréquence.

Pour chaque dent 11, 13, sur l'ensemble de la mesure, il convient de choisir une grandeur représentative comme signature de la dent 11, 13, par exemple le quantité 0.33.

De préférence, il convient de détecter une signature défectueuse au moins dix fois pour une meilleure détection. Par exemple, la durée de la mesure pour définir la signature de chaque dent 11, 13, pour un oscillateur de 4 Hz et pour une roue de vingt dents est de 60 secondes, ce qui correspond à 12 passages (répétitions) pour chaque dent 11, 13.

Il est ensuite possible de définir une médiane des vingt dents 11, 13 comme référence de comparaison. Il est possible de définir une autre caractéristique pour la comparaison, comme évoqué précédemment (par exemple une moyenne, une régression linéaire, une caractéristique commune, une caractéristique représentative, une fonction de la signature temporelle 200 et/ou fréquentielle 300, sans être limité à celles-ci).

Il est ensuite possible de définir un seuil prédéterminé comme un ou plusieurs écarts types à la médiane (ou à la moyenne, ou aux autres caractéristiques mentionnées ci-avant). Comme évoqué précédemment, il est en outre possible de prendre un coefficient de corrélation, un coefficient de variation ou un autre seuil prédéterminé comme évoqué ci-avant.

Dans un mode de réalisation préféré, il est possible de définir un seuil de plusieurs écarts types, pour sortir de la normalité. En d'autres termes, toute dent 11, 13 qui s'écarterait de la médiane d'un nombre donné d'écarts types serait considérées comme anormale et présentant un défaut. Cette dent 11, 13, serait considérée comme ébréchée ou anormale. Il conviendrait alors de prendre toutes mesures correctives utiles et/ou nécessaire, comme le remplacement de la roue 10, ou la détermination d'un temps d'utilisation avant lequel il conviendrait de changer la roue 10.

De plus, il est possible de faire correspondre des sons entre eux, c'est-à-dire de comparer certains sons en particulier afin de conforter la prédiction ou la déduction. Par exemple, comme indiqué par une flèche courbée en figure 1 à gauche, le son issu du contact 15 de la palette d'entrée 101 avec la dent en contact 13 indexé « i » peut être comparé au contact 15 de la palette de sortie 102 avec la dent indexée « i+3 », dans le cas d'un exemple particulier de roue avec vingt dents. De la même façon, en référence à la figure 1, à droite, il est possible de comparer (ou de prendre en considération par combinaison) le son issu du contact 15 de la palette de sortie 102 au niveau de la dent en contact indexée « i » avec le son issu du contact 15 de la dent avec la palette d'entrée 101 indexée « i - 4 », dans le cas d'un exemple particulier de roue avec vingt dents, de sorte à rendre plus robuste la détection d'une éventuelle dent non conforme.

La figure 2 représente la détection acoustique des anomalies de denture de la roue d'échappement et une interface de diagnostic. Le diagnostic permet de détecter une ou plusieurs dents 11 ébréchées ou anormales parmi la pluralité de dents 11 de la roue d'échappement 10.

Il est possible de représenter sur l'interface les enveloppes temporelles 200. Notons qu'il est en outre possible de représenter de façon similaire les enveloppes fréquentielles 300 de chaque dent 11, également appelée analyse spectrale (en fonction d'une échelle de fréquences, exprimées en kHz), lors du fonctionnement avec l'ancre 100. Ainsi, à chaque fois que la dent en contact 13 entre en contact avec une des palettes 101, 102, au TIC ou au TAC, le ou les sons correspondants sont détectés et enregistrés.

Un exemple d'interface ou de représentation comprend deux cadrans afin de représenter, en haut l'enveloppe temporelle 200 en fonction du temps en ms, pour le TIC, en bas l'enveloppe temporelle 200 en fonction du temps en ms, pour le TAC.

Un exemple d'interface ou de représentation comprend au moins deux cercles concentriques 201 sur l'interface, répartis en vingt secteurs correspondant à chacune des vingt dents 11, 13. Les cercles concentriques 201 correspondent à l'enveloppe temporelle 200.

Un premier cercle à l'intérieur représente la médiane des valeurs pour les dents 11, 13 (il est possible de prévoir aussi la moyenne ou les autres caractéristiques comme indiqué précédemment). Un deuxième cercle (qui peut être omis ou confondu avec un troisième cercle) représente la valeur du seuil prédéterminé (par exemple quatre sigmas ou un autre seuil comme discuté précédemment). Le troisième cercle représente le plus grand écart. Il est ainsi aisé d'afficher sur un afficheur la ou les dents 11, 13 qui présente un écart à la médiane supérieur à quatre sigmas, ou d'une manière générale la ou les dents 11, 13 qui présente un écart supérieur à un seuil prédéterminé par rapport à la signature temporelle 200.

Il est possible par exemple d'afficher sur l'interface un trait lorsque la dent 11 concernée est anormale (i.e. ébréchée) et un fin trait en cas d'absence de signal.

Sur l'interface illustrée à la figure 2, le terme « corr » correspond à la médiane +/- un sigma. La dent en douzième position sur les vingt dents est détectée car sa signature temporelle 200 (en enveloppe temporelle au TIC, en haut) est inférieure à 97.8 - 0.1. Ainsi, la dent en douzième position présente une anormalité (202) et peut être considérée comme non conforme, ébréchée, anormale ou à remplacer. Il peut être intéressant de noter que, la dent en douzième position est également détectée comme anormale en analyse spectrale au TIC (analyse spectrale non représentée, mais est une adaptation de la représentation de l'enveloppe temporelle avec les données en fonction de la fréquence).. Il est en outre à noter qu'il n'est pas obligatoire d'avoir une confirmation au TIC et au TAC pour déterminer si une dent est anormale : il est possible de considérer seulement le TIC ou le TAC. Dans l'exemple de la figure 2, la dent en douzième position est confirmée non conforme au TIC et au TAC.

En outre, il est possible d'améliorer la détection et l'analyse synchrone. Par une première hypothèse définie comme suit : si le TIC est relatif au bruit de la palette d'entrée et si la dent ébréchée est indexée « i » sur le TIC, alors elle doit se retrouver « i+3 » au TAC (pour une roue de vingt dents 11 et deux palettes 101, 102). Par une deuxième hypothèse : si le TAC est le bruit de la palette d'entrée, la dent ébréchée est indexée « i » au TAC, alors elle doit se retrouver « i-4 » au TIC (pour une roue de vingt dents 11et deux palettes 101, 102). Il est possible de vérifier qu'une même dent est non conforme sur le TIC et sur le TAC si on retrouve trois ou quatre dents d'écart entre TIC et TAC. Dans l'exemple de la figure 2, la deuxième hypothèse est vérifiée, à savoir que la dent indexée « i » au TAC se retrouve au TIC en « i-4 » . Pour faciliter la lecture, il est préférable d'indiquer sur l'interface la dent indexée «i».

Un autre exemple concerne un échappement avec une roue à vingt dents et deux palettes comprenant trois dents entre l'entrée et la sortie : si l'entrée est entendue en premier, la dent A porte l'index 1 sur le TIC et arrivera avec l'index 4 sur le TAC (soit 7 bruits après). Si la sortie est entendue en premier, la dent A porte l'index 5 sur le TIC (choix arbitraire), par contre le TAC correspondant n'est pas associé à la même dent, mais à la dent suivante A+1 ; la dent A étant en fait passée à l'index 1 lorsqu'elle était en entrée (soit 7 bruits avant).

La reconnaissance de la signature acoustique propre de la palette d'entrée 101 et de sortie 102 permet d'attribuer le signal relatif à la première puis seconde palette à la palette d'entrée 101 ou à la palette de sortie 102. Il devient alors possible d'avoir une seule indexation (selon règle précédente) et simplifier l'analyse. On peut désormais s'assurer que la dent défectueuse produit la signature acoustique la plus différente sur la palette d'entrée 101 et de sortie 102 et réduire le nombre d'écart type de différences nécessaire par rapport à la médiane. Ceci qui permet de resserrer les critères de détection et rendre l'analyse plus robuste.

Il est possible de prévoir plusieurs tours de roue 10 afin de renforcer la pertinence statistique.

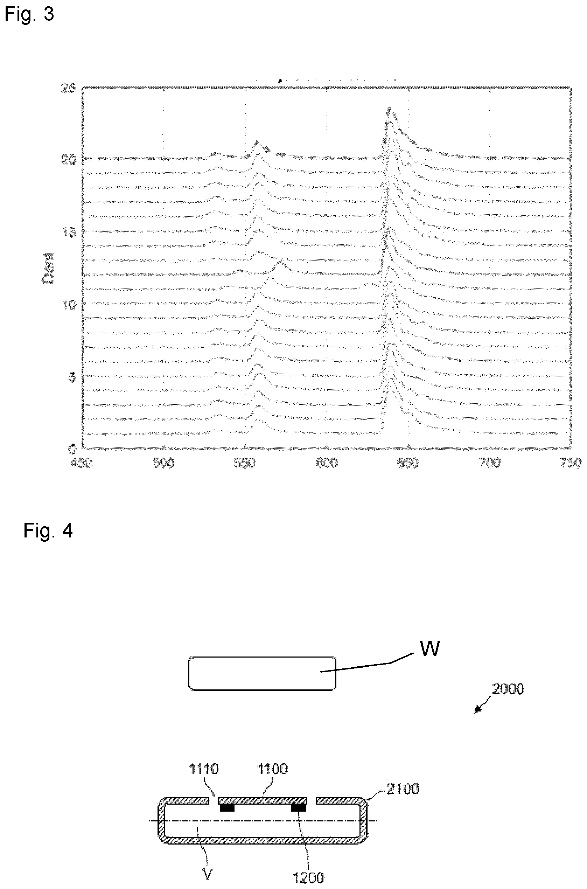

La figure 3 représente la détection acoustique des anomalies de denture de la roue d'échappement 10 avec la vue en cascade.

La signature acoustique de chaque dent 11, 13 est représentée, l'une au-dessus de l'autre, avec l'index des dents en ordonnées (en abscisses : échelle de temps resynchronisée). La dent la plus haute en index (vingt, pour une roue d'échappement à vingt dents) peut être représentée en pointillés pour faciliter la lecture. La dent la plus différente est ici représentée en trait fort (ici la douzième dent pour reprendre le cas de la figure 2). C'est la dent la moins conforme de la pluralité de dents de la roue d'échappement 10. De préférence, la signature acoustique moyenne pour chaque dent est représentée, c'est-à-dire une moyenne des valeurs pour une dent donnée, sur plusieurs tours de roue d'échappement 10.

La figure 4 représente un exemple de dispositif de mesure pour mesurer un son et mettre en oeuvre le procédé de diagnostic.

Comme indiqué ci-dessus, il est important, lors de la fabrication de montres mécaniques, de vérifier le fonctionnement des différents composants de la montre telle qu'elle est assemblée. Il s'agit, par exemple, de vérifier la bonne synchronisation du mécanisme d'horlogerie (ou mouvement d'horlogerie), la présence de défauts de fabrication, etc.

En général, les inventeurs ont reconnu que l'émission acoustique en champ proche d'une montre peut être très variable le long de son enveloppe externe et qu'un balayage spatial de l'émission acoustique en champ proche fournit une pluralité d'informations qui permettent de mieux caractériser le comportement acoustique et les sources de bruit et d'émission de la montre.

Les inventeurs ont également reconnu qu'une mesure basée sur un ou plusieurs microphones et un balayage spatial fournit les meilleures informations disponibles en termes de bande de fréquence, car les microphones ont une bande de mesure intrinsèquement plus large que les capteurs de vibrations, et aussi qu'une pluralité de microphones fournit les meilleures informations disponibles à partir de captures de signaux faibles, car la combinaison d'une pluralité de captures de signaux apporte intrinsèquement une capacité accrue de rapport signal-bruit.

Comme illustrée en figure 4, un dispositif de mesure 2000 pour mesurer le son généré par la montre W peut être utilisé, comme le dispositif de mesure 2000 ayant : une surface de support 1100, une pluralité de microphones 1200 placés sur ou sous la surface de support 1100, un contrôleur connecté à la pluralité de microphones 1200, dans lequel le contrôleur est configuré pour traiter la sortie de la pluralité de microphones 1200 de manière à obtenir un ou plusieurs signaux représentatifs du son généré par la montre W.

La pluralité de microphones 1200 peut être placée à proximité immédiate de l'objet à mesurer, comme une montre W, de sorte que le bruit de l'environnement est limité pour atteindre les microphones 1200 et que le son de la montre est mesuré avec une sensibilité et une sélectivité très élevées.

Dans certains modes de réalisation du dispositif de mesure 2000, la pluralité de microphones 1200 peut être adaptée en phase et en amplitude. La pluralité de microphones 1200 peut être configurée pour avoir un décalage d'amplitude inférieur à 3 dB, de préférence inférieur à 2 dB, de préférence encore inférieur à 1 dB, et/ou la pluralité de microphones 1200 peut être configurée pour avoir un décalage de phase inférieur à 10°, de préférence inférieur à 5°, de préférence encore inférieur à 1°.

La pluralité de microphones 1200 peut être constituée de microphones à base de MEMS.

La pluralité des microphones 1200 peut être séparée les uns des autres par une distance intra-microphone, la distance intra-microphone pouvant être inférieure à 1/2 de la plus petite longueur d'onde mesurée par le dispositif de mesure 2000, de préférence inférieure à 1/4 de la plus petite longueur d'onde, de préférence encore inférieure à 1/8 de la plus petite longueur d'onde.

La pluralité de microphones 1200 peut couvrir une distance totale, la distance totale peut être inférieure à la plus petite longueur d'onde mesurée par l'appareil de mesure 2000, de préférence inférieure à la moitié de la plus petite longueur d'onde.

La pluralité de microphones 1200 peut couvrir une distance totale, la distance totale peut être inférieure à 10 cm, de préférence inférieure à 5 cm, de préférence encore inférieure à 3 cm.

La pluralité de microphones 1200 peut comprendre au moins 4 microphones, de préférence au moins 16 microphones, de préférence encore au moins 32 microphones.

Différents microphones 1200, ou différents groupes de microphones 1200, peuvent être configurés pour mesurer des sons sur différentes gammes de fréquences. Lors de l'utilisation, un volume V compris entre la montre et une majorité, de préférence tous les microphones, peut être rempli par un liquide et/ou un gel.

La montre W à mesurer ou à écouter peut être placée à une distance de mesure de la pluralité de microphones 1200 qui peut être inférieure à 1 cm, de préférence inférieure à 0,5 cm, de préférence encore inférieure à 1 mm. La pluralité de microphones 1200 peut être configurée pour mettre en oeuvre une antenne acoustique. Une antenne acoustique peut être considérée comme un dispositif comprenant un réseau de microphones 1200 utilisé pour détecter les ondes sonores provenant d'une direction particulière.

En outre, même si un microphone peut mesurer dans la bande passante de 500 Hz à 200 kHz, il peut être utilisé pour mesurer des sons dans une bande passante plus étroite seulement, par exemple de 500 Hz à 1 kHz, pour une utilisation optimale.

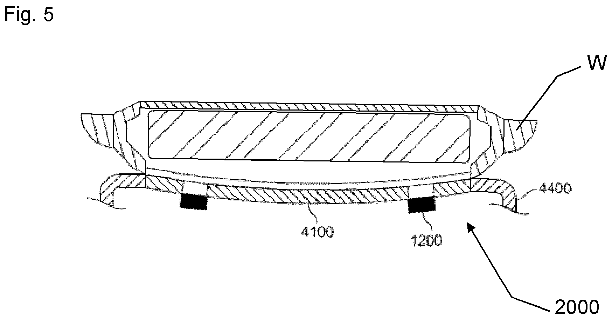

Le dispositif de mesure 2000 peut être configuré de manière à ce que la montre W soit maintenue à la distance de mesure sans support supplémentaire. Ceci peut être réalisé en fournissant un cadre approprié pour tenir la montre W. Alternativement, ou en plus, la surface de support 1100 du dispositif de mesure 2000 peut être configurée de manière à maintenir la montre en place. La partie du dispositif de mesure 2000 qui maintient la montre W en place peut avoir une forme complémentaire à au moins une partie de la forme extérieure de la montre, de sorte que la montre peut être maintenue fermement et en toute sécurité, tout en réduisant la quantité de bruit ambiant qui atteint le(s) microphone(s) grâce à la complémentarité de la structure de support et de la forme de la montre, comme il sera illustré en référence à la figure 5.

Le dispositif de mesure 2000 peut également comprendre un boîtier 2100 configuré pour définir un volume V. Le volume V est donc un volume interne du boîtier 2100. Le boîtier 2100 peut comprendre ou être relié à la surface de support 1100, de sorte que la pluralité de microphones 1200 peut être placée à l'intérieur du volume V.

Dans cette configuration, afin de permettre aux sons provenant de la montre W, qui est extérieure au volume V, d'atteindre les microphones 1200, la surface de support 1100 peut comprendre au moins une ouverture 1110.

La figure 5 représente un autre exemple de dispositif de mesure pour mesurer le son et mettre en oeuvre le procédé de diagnostic.

Comme visible par exemple à la figure 5, la surface de support 4100 du dispositif de mesure 2000 peut être flexible et/ou configurée pour se conformer à une surface de la montre W. La surface de support flexible 4100 peut être maintenue en place par un cadre de support non flexible approprié 4400, qui n'est illustré que de manière schématique à la figure 5.

On comprendra que diverses modifications et/ou améliorations évidentes pour l'homme du métier peuvent être apportées aux différents modes de réalisation de l'invention décrits dans la présente description.

## Revendications

1. Procédé de diagnostic acoustique pour détecter une dent ou une branche non conforme (11, 13) d'une roue (10), telle qu'une roue d'un mouvement horloger ou une croix de malte, comprenant les étapes suivantes :
- fournir la roue (10) ayant une pluralité de dents ou de branches (11, 13), et un système mécanique (100), telle qu'une ancre ou une autre roue, agencé pour coopérer avec la pluralité de dents ou de branches (11, 13), une pluralité de sons étant émise pendant un fonctionnement de la roue (10) avec le système mécanique (100), en raison d'une pluralité de contacts entre la pluralité de dents ou de branches (11, 13) et le système mécanique (100),
- pour chaque dent ou branche (11, 13), déterminer une signature acoustique (200, 300) du son émis, et
- détecter si une dent ou branche est non conforme parmi la pluralité de dents ou branches (11, 13).

2. Procédé selon la revendication précédente, dans lequel la dent ou branche est détectée non conforme si la signature acoustique (200, 300) de la dent ou branche non conforme présente un écart prédéterminé par rapport à la signature acoustique (200, 300) de la pluralité de dents ou branches (11, 13), et de préférence l'écart est supérieur à un seuil prédéterminé.

3. Procédé selon l'une des revendications précédentes, comprenant en outre l'étape suivante :
- procéder à une détection acoustique du fonctionnement de la roue (10) avec le système mécanique (100).

4. Procédé selon l'une des revendications précédentes, dans lequel la signature acoustique est une signature temporelle (200) et/ou fréquentielle (300).

5. Procédé selon l'une des revendications précédentes, comprenant en outre l'étape suivante :
- déterminer une signature acoustique (200, 300) de la pluralité de dents ou de branches (11, 13) basée sur la signature acoustique (200, 300) de chaque dent ou branche (11, 13).

6. Procédé de diagnostic selon l'une des revendications précédentes, dans lequel la signature acoustique (200, 300) de la pluralité de dents ou branches (11, 13) est choisie parmi :
- une médiane des signatures acoustiques (200, 300) de chaque dent ou branche (11, 13),
- une moyenne des signatures acoustiques (200, 300) de chaque dent ou branche (11, 13),
- une régression linéaire des signatures acoustiques (200, 300) de chaque dent ou branche (11, 13),
- une caractéristique commune des signatures acoustiques (200, 300) de chaque dent ou branche (11, 13),
- une caractéristique représentative des signatures acoustiques (200, 300) chaque dent ou branche (11, 13), ou
- une fonction des signatures acoustiques (200, 300) de chaque dent ou branche (11, 13).

7. Procédé de diagnostic selon l'une des revendications précédentes, dans lequel la signature acoustique (200, 300) de chaque dent ou branche (11, 13) est une enveloppe temporelle et/ou fréquentielle.

8. Procédé de diagnostic selon l'une des revendications précédentes, dans lequel, la signature acoustique (200, 300) de chaque dent ou branche (11, 13) correspond à une période, pour chaque dent ou branche (11, 13), débutant avec un son issu d'un premier contact du système mécanique (100) sur cette dent ou branche (11, 13) et se termine avec un son issu d'un dernier contact du système mécanique (100) sur cette dent ou branche (11, 13).

9. Procédé de diagnostic selon l'une des revendications précédentes, dans lequel les sons émis pendant le fonctionnement sont synchrones.

10. Procédé de diagnostic selon l'une des revendications précédentes, dans lequel la roue (10) est une roue d'échappement et le système mécanique (100) est une ancre (100).

11. Procédé de diagnostic selon la revendication précédente, dans lequel l'ancre (100) comprend une palette d'entrée (101) et une palette de sortie (102), et
dans lequel le procédé comprend en outre les étapes suivantes :
- pour chaque dent ou branche (11, 13), déterminer la signature acoustique (200, 300) des sons émis par au moins un contact de la palette d'entrée (101) sur la roue (10) et par au moins un contact de la palette de sortie (102) sur la roue (10),
- déterminer la signature acoustique (200, 300) de la pluralité de dents ou branches (11, 13) basée sur la signature acoustique (200, 300) de chaque dent ou branche (11, 13),
- détecter la dent ou branche non conforme parmi la pluralité de dents ou branches (11, 13) si la signature acoustique (200, 300) de la dent ou branche non conforme présente l'écart à la signature acoustique (200, 300) de la pluralité de dents ou branches (11, 13) supérieur au seuil prédéterminé, pour l'une de la signature acoustique (200, 300) relative à la palette d'entrée (101) et/ou l'autre de la signature acoustique (200, 300) relative à la palette de sortie (102).

12. Procédé de diagnostic selon l'une des revendications 1 à 9, dans lequel le système mécanique (100) est une autre roue.

13. Procédé de diagnostic selon l'une des revendications précédentes, dans lequel le seuil prédéterminé est choisi parmi un écart type, un multiple de l'écart type, un coefficient de corrélation, ou un coefficient de variation.

14. Procédé de diagnostic selon l'une des revendications précédentes, dans lequel le fonctionnement de la roue (10) avec le système mécanique (100) consiste à faire tourner la roue (10), et ajuster sa vitesse à l'aide du système mécanique (100), préférentiellement pendant au moins un tour de roue (10), très préférentiellement pendant une pluralité de tours de roue (10).

15. Procédé de diagnostic selon l'une des revendications précédentes, comprenant en outre l'étape consistant à :
- soumettre à une machine de prédiction la signature acoustique pour détecter si une dent ou branche est non conforme parmi la pluralité de dents ou branches (11, 13).
